# EUROPEAN PATENT SPECIFICATION

(11) **EP 3 000 314 B1**
(45) Date of publication and mention of the grant of the patent: **07.04.2021**
(21) Application number: 15187387.4
(22) Date of filing: 29.09.2015
(51) Int. Cl.: A01G 9/029

(54) **BODY FOR CULTIVATION OF A PLANT**
KÖRPER ZUM ZÜCHTEN EINER PFLANZE
CORPS POUR LA CULTURE D'UNE PLANTE

(30) Priority: 29.09.2014 NL 2013545
(43) Date of publication of application: 30.03.2016
(73) Proprietor: Dümmen Group B.V., 2678 PS De Lier (NL)
(72) Inventor: DIJKSHOORN, Edwin, 3151 ZD Hoek van Holland (NL)
(74) Representative: Arnold & Siedsma

(56) References cited:
- EP-A1- 2 572 571
- EP-A2- 0 172 060
- DE-U1- 29 906 386
- FR-A1- 2 693 079
- GB-A- 2 014 024
- US-A- 5 241 783

## Description

The present invention relates to a rooting plug for cultivation of a plant. A rooting plug is a body comprising growing medium, like organic and/or non-organic fibres, peat, coconut etcetera. Growing medium is, in this application, the medium in which the roots of a plant develop, grow or are arranged. In general the growing medium can absorb or adsorb water for feeding the plant via its roots. Optionally, the growing medium can comprise nutrients and/or fertilizer and/or soil conditioners and/or other additives to promote plant growth or root growth as well.

Rooting plugs known from the prior art are typically in the form of a dimensionally stable body, like a cylindrical or block-shaped body, of growing medium having one or more holes in the upper surface into which a seed or un-rooted cutting or, occasionally, a (pre-)rooted cutting can be inserted. The size of these holes is typically 3-8 mm. In case of seeds it is also known to use a shallow indentation in the upper surface instead of a hole. Such a dimensionally stable body of growing medium might be essentially comprised of grains of sand bonded together in some manner so that these grains define so to say a solid body.

The rooting plugs as described in the preceding paragraph are not very suitable for (pre-)rooted cuttings and tissue cultured plants. This because the growing medium is too tough to stick the rooted plants, like (pre-)rooted cuttings and tissue cultured plants, in. Insertion of rooted plants into this kind of rooting plugs will result in root damage. One known solution for this is enlarging the holes for accommodating the root structure. However, this results in a loosely captured plant, which in turn does not promote a steady and healthy growth of the plants. Another known solution is so called sliced plugs.

Sliced plugs have either a slice across the upper surface or down along a side surface of the plug. Although satisfactory growth of plants has been attained with sliced plugs, it is difficult to open the slice with one hand and insert a rooted or un-rooted cutting or other plant part with the other hand. For example, the roots are to be pressed together in order to allow insertion via the opened slice into the growing medium. It is also know, see for example EP 2,572,571, to provide the plug with a side opening or slit. Also in this case roots or material containing roots, such as the tissue (of tissue cultured plants), still has to be pressed together and/or the plug has to be folded open at the side opening/slit in order to allow insertion of the cutting, (pre-)rooted cutting, seed, or other (part of a) plant - like a somatic embryo genesis plant, tissue cultured plant, etcetera - through the side opening/slit. Like in EP 2,572,571, the side opening/slit is closed after insertion of the (part of a) plant by squeezing together the parts of the plug adjacent the side opening/slit. In EP 2,572,571, viewed in a plane transverse to the height direction of the plug, the outline of the plug is both before closing the side opening(/squeezing together) and after closing the side opening(/squeezing together) determined by the same outer surface of the plug. Using a sliced plug or a plug with side opening, like EP 2,572,571, is laborious and time consuming due to the operations required on the plug, resulting in increased labour costs, and further roots might still be damaged due to contact with the walls of the side opening/slit upon insertion through the side opening/slit.

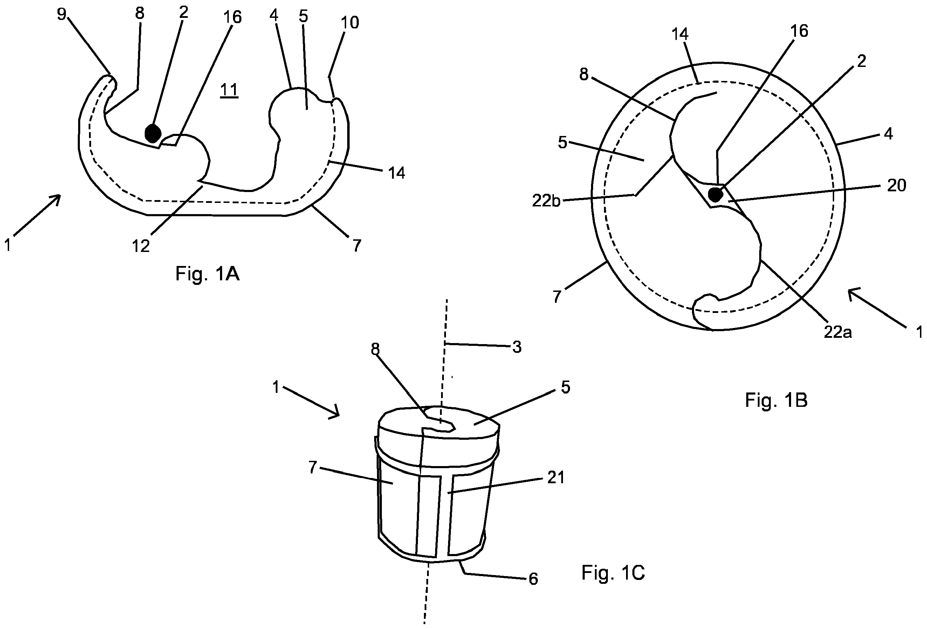

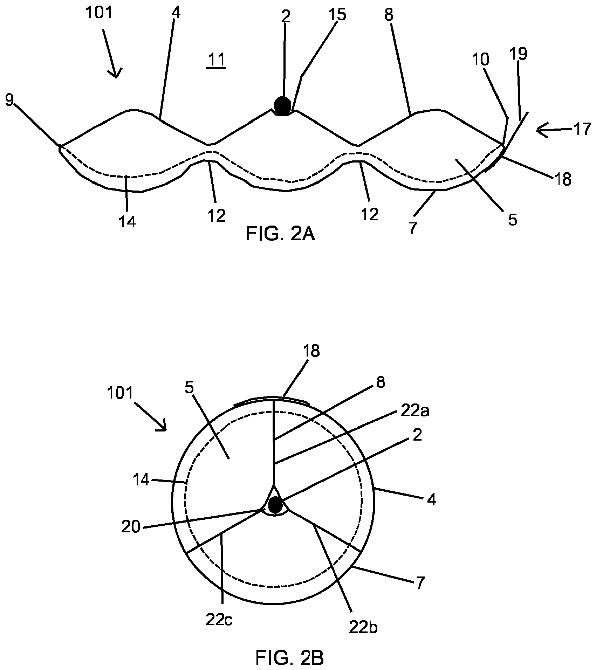

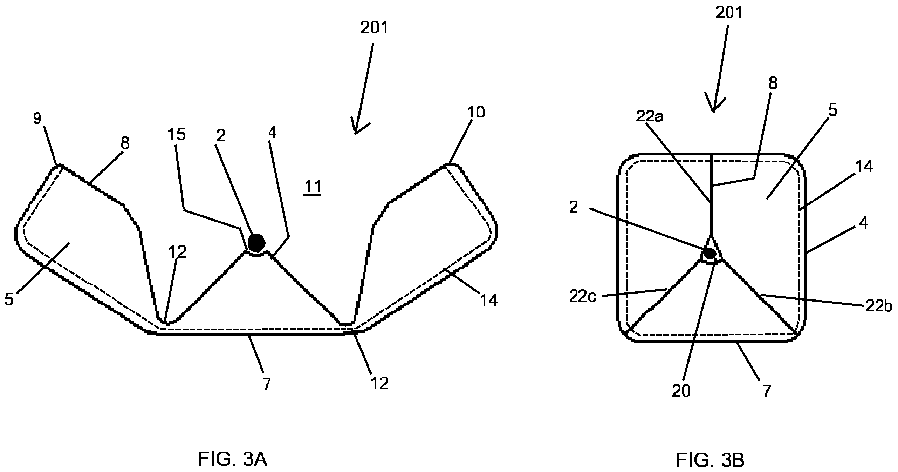

FR 2,693,079 describes a method of making plant clods to be used in the nursery of trees. This plant clod of FR 2,693,079 is quite different from rooting plugs as described above. The plant clod of FR 2,693,079 is obtained as follows: It starts with a flat bag. The bag is filled with a substrate of loose, non-bonded material and is made of a material which is impermeable for roots. As shown in figure 1 of FR 2,693,079 the filled bag is in a first flat configuration and provided with a window to allow the rooted part of a young plant to be laid onto the substrate. Subsequently the flat bag is folded around the routed part of the plant, resulting in a second flat configuration thicker than the first flat configuration, as is shown in figure 2. During this folding, the loose parts of substrate inside the bag move with respect to each other in order to allow the folding from the first flat configuration of figure 1 into the second flat configuration of figure 2 of FR 2,693,079. This is especially the case in the area of the axis X-X where the rooted plant part is. Subsequently, the folded bag of figure 2 is transformed from the second flat configuration of figure 2 into the cylindrical configuration of figure 3 of FR 2,693,079. Also during this transformation the loose parts of substrate inside the bag move with respect to each other in order to allow the transformation. The end result is a cylindrical plant clod with a rooted plant part inside and enclosed by a material which is impermeable for roots. Movement of the loose substrate inside the bag during the folding and transforming operation causes damage of the roots of the rooted plant part. According to a further embodiment of FR 2,693,079, shown in its figure 6, the rooted plant part may initially be protected by a folded piece of paper, which is removed after having the bag folded. However removal of this paper still causes damage to the roots.

The main object of the present invention is to provide an improved body of growing medium for cultivation of plants. A further object is to provide such a body which overcomes one or more of the problems addressed above.

The main object is according to a first aspect of the invention achieved by providing a body of a growing medium for cultivation of a plant, according to claim 1, wherein the body has a longitudinal axis and an external surface;
wherein the external surface is defined by:
- an upper surface part;
- a lower surface part opposite to the upper surface part;
- an outer surface part; and
- an inner surface part opposite to the outer surface part;
wherein the longitudinal axis extends from the upper surface part to the lower surface part; wherein, viewed in the direction of the longitudinal axis, the inner and outer surface parts each extend, from the upper surface part to the lower surface part and each have two opposing longitudinal sides extending in the direction of the longitudinal axis;
wherein, in a first transition zone, one said longitudinal side of the inner surface part connects to one said longitudinal side of the outer surface part and, in a second transition zone, the other said longitudinal side of the inner surface part connects to the other said longitudinal side of the outer surface part;
wherein the body is transformable from a first shape into a second shape;
wherein, viewed in a plane transverse to the longitudinal axis, the outline of the second shape is determined by the outer surface part;
wherein, in the first shape, the body is unfolded such that the inner surface part is exposed to the surrounding; and wherein, in the second shape, the body is folded up such that the inner surface part is folded up onto itself.

Although the body according to the invention is transformable from a first shape to a second shape, the body according to the invention still is dimensionally stable like (non-transformable) rooting plugs according to the prior art are.

When in the first shape, the body is in an unfolded state so that the inner surface part is exposed to the surrounding. This means that the inner surface part, with the body in the first shape, is freely accessible, not hindered by a narrow passage, like the slice, side opening or slit of prior art plugs (such as for example the so called "*offset between the end sections 14, 15 of the side wall 13*" in EP 2572571). The inner surface part being exposed in the first shape, allows easy and unhindered access of the plant part to be embedded in the body. The embedding itself takes place, after arranging the plant part to be embedded in contact with the inner surface part, by transforming the body from the first shape into the second shape. Damage to roots is prevented in this manner. When in the second shape, the inner surface part is folded up onto itself. With the body in the second shape, essentially the inner surface part is so to say collapsed against itself. Worded differently, in the second shape, the inner surface part is folded against itself at two or more sides of the centre of the plug shaped body, i.e. it is folded into - so to say - contact with itself at two or more sides of the centre of the plug shaped body. The inner surface part being folded against itself at two or more sides of the centre of the plug, results in that the plug - in the second shape - has a large internal surface over which the roots of the plant a) can easily spread themselves during growth of the roots and b) can be spread at the moment of placing a rooted part of a plant in/on the body. This in turn improves the capability of the roots for taking in water and nutrients.

When in the first shape, the body might be, and preferably is, in a relieved state, i.e. in a condition free of stress so that there is no tendency to transform by itself - for example due to material stresses or reaction stresses resulting from bending the body - into the second shape or any other shape. The body might already be in the first shape as from manufacturing the body. The body being - when in the first shape - in a relieved state provides that no effort or means are required to keep the body unfolded in its first shape. This simplifies placing of plant parts, like rooted plant parts, in/on the body considerably. Viewed in a plane transverse to the longitudinal axis, the outline of the first shape is preferably determined by both the inner and outer surface part, whilst, viewed in a plane transverse to the longitudinal axis, the outline of the second shape is determined by only the outer surface part.

According to the first aspect of the invention, the body has at least one bending zone extending from the upper surface part to the lower surface part, the at least one bending zone being more flexible than the adjacent zones of the body to facilitate folding up of the body from the first shape to the second shape. This bending zone facilitates easy transformation of the body from the first into the second shape.

According to a further embodiment of the first aspect of the invention, easy and reliable positioning of the plant part with respect to the body can be achieved when the inner surface part is provided with a positioning member, such as a recess and/or an abutment edge. Preferably this positioning member is, viewed in a plane transverse to the longitudinal axis and when the body is in the second shape, arranged adjacent the centre of the body.

According to the first aspect of the invention, a transverse axis of the body is defined as a) extending, through the body, from the first transition zone to the second transition zone, b) having, when the body is in the first shape, an elongated line shaped configuration, like a curved or straight line, and c) having, when the body is in the second shape, a ring shaped configuration; and wherein, viewed in the direction of the transverse axis, the inner surface part has a profiled configuration allowing said folding up onto itself. The line shaped configuration of the transverse axis in the first shape of the body, implies that the body is like a strip with fully exposed first surface part. The ring shaped configuration of the transverse axis in the second shape of the body, surrounds so to say the plant part so that it is embedded inside the body. It is noted that the ring shaped configuration of the transverse axis of the body can be of any shape which is in circumferential direction so to say essentially closed, like round, oval, square, rectangular, hexagonal or otherwise.

According to the first aspect of the invention, the profiled configuration is arranged to provide, when the body is in the second shape, a nesting of the inner surface part with itself. In the second shape, the profiled configuration results in a larger surface of overlap of the inner surface part onto itself. This larger overlap surface provides more contact surface for roots, which supports root growth and/or placing the roots onto the inner surface part. This nesting is, according to the invention such that, in the second shape of the body, the inner surface part interlocks - so to say - with itself preventing shifting of segments of the inner surface part with respect to each other. By preventing this shifting, damage to the roots or root structure of the plant part embedded inside the body is prevented.

According to a further embodiment of the first aspect of the invention, the profiled configuration of the inner surface part is such that, in the second shape of the body, a cavity is formed between the inner surface part - which inner surface part is folded up onto itself -, the cavity, viewed in circumferential direction around the longitudinal axis, being closed all around by the inner surface part. Providing such a cavity relieves the roots or root structure from pressure exerted by the inner surface part folded onto itself in the second shape. According to a further embodiment of the body, which according to the first aspect of the invention comprises a said cavity:
- the cavity is, viewed in a plane transverse to the longitudinal axis and when the body is in its second shape, located in the centre of the body;
   and/or
- the cavity, when the body is in the second shape, comprises a channel extending from the upper surface part in the direction of the longitudinal axis into the body, said channel optionally extending up to the lower surface part;
   and/or
- the profiled configuration, when the body is in the first shape, comprises a recess in the first surface part, which recess provides said cavity when the body is in the second shape - This recess in the first surface part enables an easy and reliable positioning of the plant part with respect to the body so that the plant part to be embedded within the body is placed on the correct location.

According to a further embodiment of the first aspect of the invention, easy and reliable positioning of the plant part with respect to the body can also be achieved when, with the body in its first shape, the profiled configuration provides, viewed in the direction of the transverse axis, an abutment edge on the first surface part. Preferably this abutment edge is, viewed in a plane transverse to the longitudinal axis and when the body is in the second shape, arranged adjacent the centre of the body.

According to a further embodiment of the first aspect of the invention:
- the outer surface part is essentially smooth;
   and/or
- the body has, when the body is in the second shape and viewed in a plane transverse to the longitudinal axis, a round, oval, rectangular or triangular cross section;
   and/or
- the body has, when the body is in the first shape and viewed in a direction perpendicular to the longitudinal axis, the body has an extended or outstretched configuration;
   and/or
- the medium comprises organic fibres - like peat and/or coconut fibres - and/or non-organic fibres , rock wool, re-bonded foam, phenolic foam, polyurethane foam, PLA melt blown fibres, media wrapped with paper or netting.

According to the first aspect of the invention, the medium comprises bonded organic or non-organic fibres or other particulate material, which might be bonded with a binder, like a polymer binder. The fibres or particulate material might however also be bonded in a different manner, for example needle punching or melt blowing fibres from a suitable material. According to the invention the body can be made from a bioplastic, for example a PLA (Polylactic acid also known as or polylactide). Wherein PLA includes PDLA (poly-D-lactide), PDLLA (poly-DL-lactide), PLLA (poly-L-lactide) as well as compositions comprising one or more of PLA, PDLA, PDLLA, and PLLA. The body according to the invention can be made easily from melt blown PLA fibres. Alternatively, the body according to the invention can be made from other known growing media like peat bonded by a binder.

According to a further embodiment of the first aspect of the invention, the body is provided with a closure mechanism for securing the body in its second shape. Such a closure mechanism might, for example be, a snap connection, having a first snap part at the first transition zone and a second snap part at the second transition zone, the snap parts mating with each other to keep the body in its second form when the first and second snap part interlock. According to another example, such a closure mechanism can be achieved by means of an adhesive or adhesive strip, arranged on the body near one transition zone and capable of adhering to the body near the other transition zone when the body is in its second shape.

According to a further embodiment of the first aspect of the invention, wherein a said cavity is formed in the profiled configuration, the cavity serves as said positioning member or as a part of a said positioning member.

According to a second aspect, the invention relates to an assembly according to claim 9 comprising a body according to the first aspect of the invention in its second shape; and a plant stem between the inner surface part folded up onto itself.

According to a third aspect of the invention, the invention relates to a method according to claim 10 of arranging a part of a plant, like a seed, cutting, or pre-rooted cutting, into a rooting plug, wherein the method comprises the steps of:
- providing a body according to the first aspect of the invention in its first shape, in which first shape the body might, according to a further embodiment of the third aspect, be in a relieved state;
- placing a said part of a plant on the inner surface part of the body; and
- subsequently folding the body from its first shape into its second shape.

This method might additionally comprise the step of placing the folded up body with said part of a plant in between the inner surface part, into a plug cavity of a plant tray.

The present invention will be further explained with reference to the enclosed drawing. In this drawing:
Figure 1 is a schematic representation of a first embodiment; Figure 1A being a view on the upper side of a body according to the first embodiment of the invention in its first shape; Figure 1B being a view similar as in Figure 1A, but now showing the body in its second shape; and Figure 1C being a perspective view of the body in its second shape;
Figure 2 is a schematic representation of a second embodiment; Figure 2A being a view on the upper side of a body according to the second embodiment of the invention in its first shape; Figure 2B being a view similar as in Figure 2A, but now showing the body in its second shape;
Figure 3 is a schematic representation of a third embodiment; Figure 3A being a view on the upper side of a body according to the third embodiment of the invention in its first shape; Figure 3B being a view similar as in Figure 3A, but now showing the body in its second shape.

Referring to figures 1, 2 and 3, it is noted that the first embodiment of the body according to the invention is indicated with reference number 1 (figure 1), that the second embodiment of the body according to the invention is indicated with reference number 101 (figure 2), that the third embodiment of the body according to the invention is indicated with reference number 201 (figure 3), and that otherwise figures 1, 2 and 3 use the same reference numbers for corresponding parts of the first, second and third embodiment. The description of the drawing (the term drawing as used in this description indicates all figures) below relates to the embodiment of figure 1 as well as to the embodiment of figure 2 as well as to the embodiment of figure 3, unless explicitly stated otherwise.

Referring to the drawing, the invention relates to what is known as a so called 'rooting plug' for cultivating plants. Contrary to known rooting plugs, the 'plug' according to the invention has a first shape from which it is transformable into a second shape. In the second shape, the 'plug' according to the invention has the form of a so called plug (see figures 1B, 1C, 2B and 3B), but in the first shape the 'plug' according to the invention actually does not have the form of a plug, but the form is more like a strip shaped configuration (see figures 1A, 2A and 3A). The invented device is therefore indicated as 'a body for cultivation of plants'.

The body 1, 101, 201 comprises a growing medium. Growing media for a rooting plug are well known in the prior art. Basically all growing media known in the prior art or to be developed in future can be used in a body 1, 101, 201 according to the invention, provided it allows transformation from the first shape into the second shape as required according to the invention. As a general example of a growing medium suitable for use in the body according to the invention, a medium comprising organic and/or non-organic fibres - which might optionally be bonded with a binder, like a polymer binder - can be mentioned. For the body 1, 101, 201 according to the invention one might use a growing medium of melt blown PLA fibres or a growing medium of peat and/or coconut fibres bonded with a polymer binder. As an example only, a growing medium of polymer bonded peat is mentioned, which is used amongst others in the Flexi-plug 72R of Grow-Tech LLC, South Portland, ME, USA. As another example of a growing medium based on melt blown PLA fibres is mentioned, as is used in BioStrate also a product of Grow-Tech LLC, South Portland, ME, USA.

The body 1, 101, 201 can be an integral part made solely from a growing medium, but it can also contain other parts. For example it might be made from two or more parts, interconnected by a flexible strip material (like the strip 18 of the closure mechanism 17 as described in relation to the embodiment of figure 2) allowing the transformation from the first shape into the second shape.

Returning to the drawing, the body 1, 101, 201 for cultivation of a plant 2 has an external surface 4 forming the outer surface of the body 1, 101, 201. The external surface 4 of the body 1, 101, 201 consists of 4 surface parts together defining the external surface 4. These surface parts are: an upper surface part 5, a lower surface part 6 opposite to the upper surface part 5, an outer surface part 7, and an inner surface part 8 opposite the outer surface part 7.

The body 1, 101, 201 further has a longitudinal axis 3 (only shown in fig. 1C, but also present in the embodiments of fig. 2 and 3). Referring to the manner of showing the longitudinal axis 3 in figure 1C, it is noted that figure 1C only shows the imaginary parts of the longitudinal axis extending outside the body, the part of the longitudinal axis 3 extending inside the body 3 is not shown for clarity reasons, but it will be clear that inner part of the longitudinal axis 3 extends from the upper surface part 5 - starting at the lower end of the upper part of the longitudinal axis 3 as shown in figure 1C - through the body 1, 101, 201 to the lower surface part 6 - ending at the upper end of the lower part of the longitudinal axis 3 as shown in figure 1C.

The longitudinal axis 3 extends from the upper surface part 5 to the lower surface part 6. Viewed in the direction of the longitudinal axis, the inner surface part 8 and outer surface part 7 each extend from the upper surface part 5 to the lower surface part 6. Further the inner surface part 8 and outer surface part 7 each have two opposing longitudinal sides extending in the direction of the longitudinal axis 3. One longitudinal side of the inner surface part 8 and one longitudinal side of the outer surface part 7 are connected in a first transition zone 9 to form a continuous transition from the inner surface part 8 to the outer surface part 7. Similar, the other longitudinal side of the inner surface part 8 and the other longitudinal side of the outer surface part 7 are connected in a second transition zone 10 to form a continuous transition from the inner surface part 8 to the outer surface part 7. The inner surface part 8 fades so to say into the outer surface part 7 at the locations of the transition zones 9 and 10.

The body 1, 101, 201 is transformable from a first shape shown in fig. 1A, 2A and fig 3A to a second shape shown in fig. 1B, 1C, 2B and 3B. As can be seen in fig. 1B, 1C, 2B and 3B, the outline of the second shape is, viewed in a plane transverse to the longitudinal axis 3 fully determined by the outer surface part 7. In the second shape, the inner surface part 8 is completely embedded within the body 1, 101, 201 and inside the outer surface part 7.

In the first shape, the body 1, 101, 201 is in an unfolded state such that the inner surface part 8 is exposed to the surrounding 11. Exposed to the surrounding means that it is freely accessible for a plant part with/without root structure, so that the plant part is not hindered by a small passage through which it is to be passed. Referring to fig. 1A, 2A and 3A, exposed means, in the first and second embodiment, effectively that the body is in a kind of extended/outstretched configuration.

In the first shape/unfolded state, the body 1, 101, 201 as shown in the figures 1A, 2A and 3A is in a relieved state in which it remains as from itself. The body 1, 101, 201 does not close automatically, neither is there any tendency to transform by itself in the direction of the second shape. This facilitates easy placing plants, seeds, rooted plant parts etcetera in/on the body. It is however noted that according to another embodiment some bias might be present in the body 1, 101, 201 in order to assist in closing the body from the first to the second shape.

As can be seen in fig. 1B, 2B and 3B, the body is in its second shape folded up such that the inner surface part 8 is folded up onto itself. In the centre a small cavity 20 might remain. In case a said small cavity 20 remains, the inner surface part 8 is folded against itself at two or more sides of the cavity, i.e. it is folded into contact with itself at two or more sides of the cavity 20. Worded more in general - covering for example the situation that there is no cavity in the centre -, the inner surface part 8 is folded against itself at two or more sides of the centre of the plug shaped body 1, 101, 201, i.e. it is folded into contact with itself at two or more sides of the centre of the plug shaped body 1, 101, 201.

In the first embodiment of fig. 1, the body 1 has one bending zone 12 which is more flexible , especially thinner, than the adjacent zones of the body 1 in order to facilitate folding up of the body from the first to the second shape. In the second embodiment of fig. 2 and in the third embodiment of fig. 3, there are two such bending zones 12. It is noted that within the scope of the invention as determined by the claims, it is also conceivable to provide a body with more than two bending zones, like three, four, five or more bending zones.

A transverse axis 14 of the body 1,101, 201 is defined as: extending through the body 1, 101, 201 from the first transition zone 9 to the second transition zone 10; having, when the body 1, 101, 201 is in the first shape, an elongated line shaped configuration (which might be straight or curved) see fig. 1A, 2A and 3A, and having, when the body 1, 101, 201 is in the second shape, a ring shaped configuration, see fig. 1B, 2B and 3B. As can be seen in fig. 1, the inner surface part 8 has a profiled configuration allowing nesting or interlocking of the inner surface part with itself. This prevents shifting of segments of the inner surface part with respect to each other.

As can be seen in the drawing, in the first as well as the second as well as the third embodiment of the invention the inner surface part 8 is profiled in such a manner that in the second shape a channel 20 is formed near the centre of the plug shaped body 1, 101, 201. In the first as well as the second and third embodiment of the body 1, 101, 201, the cavity is, in the second shape of the body, a channel 20 extending from the upper surface part 5 to the lower surface part 6. It is however to be noted that, within the scope of the invention as defined by the claims, it is very well conceivable that the cavity is just a cavity fully enclosed by the body, i.e. not being open towards the upper surface part or lower surface part. This can for example be the case in case a seed is to be placed inside the body. Referring to fig. 2 and fig 3, the cavity can be the result of a recess 15 formed in the inner surface part. Referring to fig. 1, the cavity can also be the result of profiling the inner surface part 8 at two locations, which, when the body is in the second shape, lie opposite each other.
As can be seen further in the drawing, especially in figures 1B, 1C, 2B and 3B, the inner surface part 8 of the body 1, 101, 201, when in its second shape, is at two or more sides of the centre/longitudinal axis 3 of the plug folded into contact with itself. In the first embodiment of figure 1, this is at two opposing sides. In figure 1B, the areas where the '*inner surface part 8 folded against itself* actually contacts itself have been indicated with 22a and 22b. In the second embodiment of figure 2 and the third embodiment of figure 3, this is at three sides spaced at angles of about 120° around the centre/longitudinal axis 3. In figures 2B and 3B, the areas where the *'inner surface part 8 folded against itself* actually contacts itself have been indicated with 22a, 22b and 22c. These contact areas 22a, 22b, 22c allow easy spreading of the roots through the body during growth of the roots as well as at the moment of placing plant parts with roots in/on the body. This results in an enlarged surface of contact between the roots and the growing medium, and an improved growth of the plant as it can easier take in water and nutrients from the growing medium.

In order to provide a reference point for placing the plant part at the location desired, the inner surface part 8 can be provided with a recess (no. 15 in fig. 2A and 3A) and/or with an abutment (no. 16 in fig. 1A and 1B).

Referring to fig. 1C, the body 1 can be maintained in its second shape by placing it in a cage 21 or in the plug hole of a so called plug tray. Referring to fig. 2, the body 101 can be maintained in its second shape by means of a closure mechanism 17, which in case of the embodiment of fig. 2 has the form of a strip 18 of flexible material, which strip 18 is provided with an adhesive 19 allowing the free part of the strip of fig. 1A to be adhered to the outer surface part 7, as shown in fig. 2B. It is to be noted that the closure mechanism 17 of figure 2 or any other closure mechanism 17 can also be applied to the embodiment of fig. 1 or fig. 3. Further a cage similar to the cage 21 in fig. 1C can also be used with the embodiments of fig. 2 and 3.

### List of reference numbers

- 1: body of first embodiment
- 2: plant
- 3: longitudinal axis
- 4: external surface
- 5: upper surface part
- 6: lower surface part
- 7: outer surface part
- 8: inner surface part
- 9: first transition zone
- 10: second transition zone
- 11: surrounding
- 12: bending zone
- 13: cavity
- 14: transverse axis
- 15: recess
- 16: abutment edge
- 17: closure mechanism
- 18: strip
- 19: adhesive surface
- 20: channel
- 21: cage
- 22a, 22b, 22c: contact areas
- 101: body of second embodiment
- 201: body of third embodiment

## Claims

1. Body of growing medium (1; 101; 201) for cultivation of a plant (2;
wherein the body (1; 101; 201) has a longitudinal axis (3) and an external surface (4);
wherein the external surface (4) is defined by:
• an upper surface part (5);
• a lower surface part (6) opposite to the upper surface part (5);
• an outer surface part (7); and
• an inner surface part (8) opposite to the outer surface part (7);
wherein the longitudinal axis (3) extends from the upper surface part (5) to the lower surface part (6); wherein, viewed in the direction of the longitudinal axis (3), the inner (8) and outer (7) surface parts each extend, from the upper surface part (5) to the lower surface part (6) and each have two opposing longitudinal sides extending in the direction of the longitudinal axis (3);
wherein, in a first transition zone (9), one said longitudinal side of the inner surface part (8) is connected to one said longitudinal side of the outer surface part (7) and, in a second transition zone (10), the other said longitudinal side of the inner surface part (8) is connected to the other said longitudinal side of the outer surface part (7);
wherein the body (1; 101; 201) is transformable from a first shape into a second shape;
wherein, viewed in a plane transverse to the longitudinal axis (3), the outline of the second shape is determined by the outer surface part (7);
wherein, in the first shape, the body (1; 101; 201) is unfolded such that the inner surface part (8) is exposed to the surrounding (11);
wherein, in the second shape, the body (1; 101; 201) is folded up such that the inner surface part (8) is folded up onto itself;
wherein the growing medium comprises fibres or particulate material;
wherein the fibres or particulate material are bonded and that the body of growing medium is a dimensionally stable body;
wherein a transverse axis (14) of the body (1; 101; 201) is defined as:
• extending, through the body (1; 101; 201), from the first transition zone (9) to the second transition zone (10),
• having, when the body (1; 101; 201) is in the first shape, an elongated line shaped configuration, and
• having, when the body (1; 101; 201) is in the second shape, a ring shaped configuration; and
wherein, viewed in the direction of the transverse axis (14), the inner surface part (8) has a profiled configuration allowing said folding up onto itself;
wherein the body (1; 101; 201) has at least one bending zone (12) extending from the upper surface part (5) to the lower surface part (6), the at least one bending zone (12) being more flexible than the adjacent zones of the body (1; 101; 201) to facilitate folding up of the body (1; 101; 201) from the first shape to the second shape;
wherein the profiled configuration is arranged to provide, when the body (1; 101; 201) is in the second shape, a nesting of the inner surface part (8) with itself, and **characterized in that** said nesting is such that, in the second shape of the body (1; 101; 201), the inner surface part (8) interlocks with itself so that shifting of segments of the inner surface part (8) with respect to each other is prevented.

2. Body (1; 101; 201) according to claim 1, wherein the inner surface part (8) is provided with a positioning member, such as a recess (15) and/or an abutment edge (16), and wherein, viewed in a plane transverse to the longitudinal axis (3) and when the body (1; 101; 201) is in its second shape, the positioning member (13, 15, 16) is preferably located in the centre of the body (1; 101; 201).

3. Body (1; 101; 201) according to claim 1 or claim 2, wherein the profiled configuration of the inner surface part (8) is such that, in the second shape of the body (1; 101; 201), a cavity (13) is formed between the inner surface part (8), which cavity (13) is, viewed in circumferential direction around the longitudinal axis (3), closed all around by the inner surface part (8).

4. Body (1; 101; 201) according to claim 3,
• wherein, viewed in a plane transverse to the longitudinal axis (3) and when the body (1; 101; 201) is in its second shape, the cavity (13) is located in the centre of the body (1; 101; 201);
and/or
• wherein, when the body (1; 101; 201) is in the second shape, the cavity (13) comprises a channel (20) extending from the upper surface part (5) in the direction of the longitudinal axis (3) into the body (1; 101; 201), said channel (20) optionally extending up to the lower surface part (6);
and/or
• wherein the cavity provides the positioning member of any of claims 3-4.

5. Body (1; 101; 201) according to one of the preceding claims,
• wherein the outer surface part (7) is essentially smooth;
and/or
• wherein, when the body (1; 101; 201) is in the second shape and viewed in a plane transverse to the longitudinal axis (3), the body (1; 101; 201) has a round, oval, rectangular or triangular cross section;
and/or
• wherein, when the body (1; 101; 201) is in the first shape and viewed in a direction perpendicular to the longitudinal axis (3), the body (1; 101; 201) has an extended configuration.

6. Body (1; 101; 201) according to one of the preceding claims,
• wherein the fibres or particulate material are bonded with a binder;
or
• wherein the growing medium comprises organic and/or non-organic fibres bonded with a binder, like a polymer binder;
or
• wherein the growing medium comprises melt blown PLA fibres.

7. Body (1; 101; 201) according to one of the preceding claims, wherein the body (1; 101; 201) is provided with a closure mechanism (17) for securing the body (1; 101; 201) in its second shape.

8. Body (1; 101; 201) according to one of the preceding claims, wherein the body is in a relieved state when it is in the first shape thereof.

9. Assembly comprising:
• a body (1; 101; 201) according to one of the preceding claims in its second shape;
and
• a plant (2) stem between the inner surface part (8) folded up onto itself.

10. Method of arranging a part of a plant (2), like a seed, cutting, or pre-rooted cutting, into a rooting plug, wherein the method comprises the steps of:
• providing a body (1; 101; 201) according to one of the claims 1-8 in its first shape;
• placing a said part of a plant (2) on the inner surface part (8) of the body (1; 101; 201); and
• subsequently folding the body (1; 101; 201) from its first shape into its second shape.

11. Method according to claim 10, additionally comprising the step of placing the folded up body (1; 101; 201) with said part of a plant (2) in between the inner surface part (8), into a plug cavity (13) of a plant (2) tray.

## Patentansprüche

1. Körper eines Zuchtmediums (1; 101; 201) zur Kultivierung einer Pflanze (2);
wobei der Körper (1; 101; 201) eine Längsachse (3) und eine äußere Oberfläche (4) hat; wobei die äußere Oberfläche (4) definiert ist durch:
- einen oberen Oberflächenteil (5);
- einen unteren Oberflächenteil (6) entgegengesetzt zu dem oberen Oberflächenteil (5);
- einen äußeren Oberflächenteil (7); und
- einen inneren Oberflächenteil (8) entgegengesetzt zu dem äußeren Oberflächenteil (7);
wobei die Längsachse (3) sich von dem oberen Oberflächenteil (5) zu dem unteren Oberflächenteil (6) erstreckt;
wobei die inneren (8) und äußeren (7) Oberflächenteile in der Richtung der Längsachse (3) gesehen sich jeweils von dem oberen Oberflächenteil (5) zu dem unteren Oberflächenteil (6) erstrecken und jeweils zwei entgegengesetzte Längsseiten haben, die sich in der Richtung der Längsachse (3) erstrecken;
wobei eine Längsseite des inneren Oberflächenteils (8) in einer ersten Übergangszone (9) mit einer Längsseite des äußeren Oberflächenteils (7) verbunden ist, die andere Längsseite des inneren Oberflächenteils (8) in einer zweiten Übergangszone (10) mit der anderen Längsseite des äußeren Oberflächenteils (7) verbunden ist;
wobei der Körper (1; 101; 201) von einer ersten Form in eine zweite Form umwandelbar ist; wobei der Umriss der zweiten Form in einer Ebene quer zu der Längsachse (3) gesehen durch den äußeren Umfangsteil (7) definiert ist;
wobei der Körper (1; 101; 201) in der ersten Form derart aufgeklappt ist, dass der innere Oberflächenteil (8) zu der Umgebung freiliegt;
wobei der Körper (1; 101; 201) in der zweiten Form derart zusammengeklappt ist, dass der innere Oberflächenteil (8) auf sich selbst geklappt ist;
wobei das Zuchtmedium Fasern oder partikelförmiges Material aufweist;
wobei die Fasern oder das partikelförmige Material verbunden sind und der Körper des Zuchtmediums ein formstabiler Körper ist;
wobei eine Querachse (14) des Körpers (1; 101; 201) definiert ist als:
- sich von der ersten Übergangszone (9) zu der zweiten Übergangszone (10) durch den Körper (1; 101; 201) erstreckend,
- wenn der Körper (1; 101; 201) in der ersten Form ist, eine langgestreckte linienförmige Konfiguration habend;
wenn der Körper (1; 101; 201) in der zweiten Form ist, eine ringförmige linienförmige Konfiguration habend; und
wobei der innere Oberflächenteil (8) in der Richtung der Querachse (14) gesehen eine profilierte Konfiguration hat, die das Zusammenklappen auf sich selbst zulässt;
wobei der Körper (1; 101; 201) wenigstens eine Biegezone (12) hat, die sich von dem oberen Oberflächenteil (5) zu dem unteren Oberflächenteil (6) erstreckt, wobei die wenigstens eine Biegezone (12) flexibler als die benachbarten Zonen des Körpers (1; 101; 201) ist, um das Zusammenklappen des Körpers (1; 101; 201) von der ersten Form in die zweite Form zu erleichtern;
wobei die profilierte Konfiguration eingerichtet ist, um, wenn der Körper (1; 101; 201) in der zweiten Form ist, ein Verschachteln des inneren Oberflächenteils (8) mit sich selbst bereitzustellen, und **dadurch gekennzeichnet, dass** das Verschachteln derart ist, dass der innere Oberflächenteil (8) in der zweiten Form des Körpers (1; 101; 201) mit sich selbst ineinandergreift, so dass das Verschieben von Segmenten des inneren Oberflächenteils (8) in Bezug aufeinander verhindert wird.

2. Körper (1; 101; 201) nach Anspruch 1, wobei der innere Oberflächenteil (8) mit einem Positionierungselement, wie etwa einer Vertiefung (15) und/oder einer Anschlagkante (16) versehen ist, wobei, wenn der Körper (1; 101; 201) in seiner zweiten Form ist, das Positionierungselement (13, 15, 16) in einer Ebene quer zu der Längsachse (3) gesehen bevorzugt in der Mitte des Körpers (1; 101; 201) angeordnet ist.

3. Körper (1; 101; 201) nach Anspruch 1 oder Anspruch 2, wobei die profilierte Konfiguration des inneren Oberflächenteils (8) derart ist, dass in der zweiten Form des Körpers (1; 101; 201) ein Hohlraum (13) zwischen dem inneren Oberflächenteil (8) ausgebildet wird, wobei dieser Hohlraum (13) in der Umfangsrichtung um die Längsachse (3) herum gesehen, rundum durch den inneren Oberflächenteil (8) geschlossen ist.

4. Körper (1; 101; 201) nach Anspruch 3,
- wobei der Hohlraum (13) in einer Ebene quer zu der Längsachse (3) gesehen und wenn der Körper (1; 101; 201) in seiner zweiten Form ist, in der Mitte des Körpers (1; 101; 201) angeordnet ist;
und/oder
- wobei der Hohlraum (13), wenn der Körper (1; 101; 201) in der zweiten Form ist, einen Kanal (20) aufweist, der sich von dem oberen Oberflächenteil (5) in die Richtung der Längsachse (3) in den Körper (1; 101; 201) erstreckt, wobei der Kanal (20) sich optional bis zu dem unteren Oberflächenteil (6) erstreckt;
- wobei der Hohlraum das Positionierungselement nach einem der Ansprüche 3 - 4 bereitstellt.

5. Körper (1; 101; 201) nach einem der vorhergehenden Ansprüche,
- wobei der äußere Oberflächenteil (7) im Wesentlichen glatt ist;
und/oder
- wobei der Körper (1; 101; 201), wenn der Körper (1; 101; 201) in der zweiten Form ist und in einer Ebene quer zu der Längsachse betrachtet wird, einen runden, rechteckigen oder dreieckigen Querschnitt hat;
und/oder
- wobei der Körper (1; 101; 201), wenn der Körper (1; 101; 201) in der ersten Form ist und in einer Richtung senkrecht zu der Längsachse (3) betrachtet wird, eine erweiterte Konfiguration hat.

6. Körper (1; 101; 201) nach einem der vorhergehenden Ansprüche,
- wobei die Fasern oder das partikelförmige Material mit einem Bindemittel verbunden sind, oder
- wobei das Zuchtmedium organische und/oder nichtorganische Fasern, die mit einem Bindemittel, wie einem Polymerbindemittel, verbunden ist, aufweist;
oder
wobei das Zuchtmedium schmelzgeblasene PLA-Fasern aufweist.

7. Körper (1; 101; 201) nach einem der vorhergehenden Ansprüche, wobei der Körper (1; 101; 201) mit einem Verschlussmechanismus (17) zum Befestigen des Körpers (1; 101; 201) in seiner zweiten Form versehen ist.

8. Körper (1; 101; 201) nach einem der vorhergehenden Ansprüche, wobei der Körper in einem entspannten Zustand ist, wenn er in seiner ersten Form ist.

9. Anordnung, die aufweist:
- einen Körper (1; 101; 201) nach einem der vorhergehenden Ansprüche in seiner zweiten Form; und
- einen Stängel einer Pflanze (2) zwischen dem inneren Oberflächenteil (8), der auf sich selbst zusammengeklappt ist.

10. Verfahren zum Anordnen eines Teils einer Pflanze (2), wie eines Samens, eines Stecklings oder vorgewurzelten Stecklings in einen Bewurzelungsststeckeinsatz, wobei das Verfahren die folgenden Schritte aufweist:
- Bereitstellen eines Körpers (1; 101; 201) nach einem der Ansprüche 1 - 8 in seiner ersten Form;
- Anordnen des Teils einer Pflanze (2) auf dem inneren Teil (8) des Körpers (1; 101; 201); und
- anschließendes Klappen des Körpers (1; 101; 201) von seiner ersten Form in seine zweite Form.

11. Verfahren nach Anspruch 10, das zusätzlich den Schritt des Anordnens des zusammengeklappten Körpers (1; 101; 201) mit dem Teil einer Pflanze (2) zwischen dem inneren Oberflächenteil (8) in einen Steckeinsatzhohlraum (13) einer Schale für Pflanzen (2) aufweist.

## Revendications

1. Corps de milieu de croissance (1 ; 101 ; 201) pour la culture d'une plante (2) ;
dans lequel le corps (1 ; 101 ; 201) possède un axe longitudinal (3) et une surface externe (4) ; dans lequel la surface externe (4) est définie par :
- une partie de surface supérieure (5) ;
- une partie de surface inférieure (6) opposée à la partie de surface supérieure (5) ;
- une partie de surface externe (7) ; et
- une partie de surface interne (8) opposée à la partie de surface externe (7) ;
dans lequel l'axe longitudinal (3) s'étend de la partie de surface supérieure (5) à la partie de surface inférieure (6) ;
dans lequel, visualisées dans la direction de l'axe longitudinal (3), les parties de surface interne (8) et externe (7) s'étendent chacune de la partie de surface supérieure (5) à la partie de surface inférieure (6) et possèdent chacune deux côtés longitudinaux opposés s'étendant dans la direction de l'axe longitudinal (3) ;
dans lequel, dans une première zone de transition (9), l'un dit côté longitudinal de la partie de surface interne (8) est relié à l'un dit côté longitudinal de la partie de surface externe (7) et, dans une seconde zone de transition (10), l'autre dit côté longitudinal de la partie de surface interne (8) est relié à l'autre dit côté longitudinal de la partie de surface externe (7) ;
dans lequel le corps (1 ; 101 ; 201) est apte à être transformé d'une première forme en une seconde forme ;
dans lequel, visualisée dans un plan transversal à l'axe longitudinal (3), le contour de la seconde forme est déterminé par la partie de surface externe (7) ;
dans lequel, dans la première forme, le corps (1 ; 101 ; 201) est déplié de sorte que la partie de surface interne (8) soit exposée vers l'environnement (11) ;
dans lequel, dans la seconde forme, le corps (1 ; 101 ; 201) est replié de sorte que la partie de surface interne (8) soit repliée sur elle-même ;
dans lequel le milieu de croissance comprend des fibres ou un matériau particulaire ;
dans lequel les fibres ou le matériau particulaire sont liés et en ce que le corps de milieu de croissance est un corps dimensionnellement stable ;
dans lequel un axe transversal (14) du corps (1 ; 101 ; 201) est défini comme :
- s'étendant, à travers le corps (1 ; 101 ; 201), de la première zone de transition (9) à la seconde zone de transition (10),
- ayant, lorsque le corps (1 ; 101 ; 201) est dans la première forme, une configuration en forme de ligne allongée, et
- ayant, lorsque le corps (1 ; 101 ; 201) est dans la seconde forme, une configuration en forme d'anneau ; et
dans lequel, visualisée dans la direction de l'axe transversal (14), la partie de surface interne (8) possède une configuration profilée permettant ledit repliement sur elle-même ;
dans lequel le corps (1 ; 101 ; 201) possède au moins une zone de courbure (12) s'étendant de la partie de surface supérieure (5) à la partie de surface inférieure (6), l'au moins une zone de courbure (12) étant plus souple que les zones adjacentes du corps (1 ; 101 ; 201) pour faciliter le repliement du corps (1 ; 101 ; 201) de la première forme à la seconde forme ;
dans lequel la configuration profilée est conçue pour fournir, lorsque le corps (1 ; 101 ; 201) est dans la seconde forme, un emboîtement de la partie de surface interne (8) avec elle-même, et **caractérisé en ce que** ledit emboîtement est tel que, dans la seconde forme du corps (1 ; 101 ; 201), la partie de surface interne (8) s'imbrique avec elle-même de sorte qu'un décalage de segments de la partie de surface interne (8) les uns par rapport aux autres est empêché.

2. Corps (1 ; 101 ; 201) selon la revendication 1, dans lequel la partie de surface interne (8) est munie d'un organe de positionnement, tel qu'un évidement (15) et/ou un bord de butée (16), et dans lequel, visualisé dans un plan transversal à l'axe longitudinal (3) et lorsque le corps (1 ; 101 ; 201) est dans sa seconde forme, l'organe de positionnement (13, 15, 16) est de préférence situé au centre du corps (1 ; 101 ; 201).

3. Corps (1 ; 101 ; 201) selon la revendication 1 ou la revendication 2, dans lequel la configuration profilée de la partie de surface interne (8) est telle que, dans la seconde forme du corps (1 ; 101 ; 201), une cavité (13) est formée entre la partie de surface interne (8), laquelle cavité (13) est, visualisée dans une direction circonférentielle autour de l'axe longitudinal (3), fermée de toutes parts par la partie de surface interne (8).

4. Corps (1 ; 101 ; 201) selon la revendication 3,
- dans lequel, visualisée dans un plan transversal à l'axe longitudinal (3) et lorsque le corps (1 ; 101 ; 201) est dans sa seconde forme, la cavité (13) est située au centre du corps (1 ; 101 ; 201) ;
et/ou
- dans lequel, lorsque le corps (1 ; 101 ; 201) est dans la seconde forme, la cavité (13) comprend un canal (20) s'étendant à partir de la partie de surface supérieure (5) dans la direction de l'axe longitudinal (3) jusqu'à l'intérieur du corps (1 ; 101 ; 201), ledit canal (20) s'étendant facultativement jusqu'à la partie de surface inférieure (6) ;
et/ou
- dans lequel la cavité fournit l'organe de positionnement selon l'une quelconque des revendications 3 à 4.

5. Corps (1 ; 101 ; 201) selon l'une des revendications précédentes,
- dans lequel la partie de surface externe (7) est essentiellement lisse ;
et/ou
- dans lequel, lorsque le corps (1 ; 101 ; 201) est dans la seconde forme et visualisé dans un plan transversal à l'axe longitudinal (3), le corps (1 ; 101 ; 201) possède une section transversale ronde, ovale, rectangulaire ou triangulaire ;
et/ou
- dans lequel, lorsque le corps (1 ; 101 ; 201) est dans la première forme et visualisé dans une direction perpendiculaire à l'axe longitudinal (3), le corps (1 ; 101 ; 201) possède une configuration étendue.

6. Corps (1 ; 101 ; 201) selon l'une des revendications précédentes,
- dans lequel les fibres ou le matériau particulaire sont liés avec un liant ;
ou
- dans lequel le milieu de croissance comprend des fibres organiques et/ou non organiques liées avec un liant, tel qu'un liant polymère ;
ou
- dans lequel le milieu de croissance comprend des fibres d'acide polylactique, PLA, soufflées par fusion.

7. Corps (1 ; 101 ; 201) selon l'une des revendications précédentes, dans lequel le corps (1 ; 101 ; 201) est muni d'un mécanisme de fermeture (17) pour fixer le corps (1 ; 101 ; 201) dans sa seconde forme.

8. Corps (1 ; 101 ; 201) selon l'une des revendications précédentes, dans lequel le corps est dans un état relâché lorsqu'il est dans sa première forme.

9. Ensemble comprenant :
- un corps (1 ; 101 ; 201) selon l'une des revendications précédentes dans sa seconde forme ; et
- une tige de plante (2) au sein de la partie de surface interne (8) repliée sur elle-même.

10. Procédé d'agencement d'une partie d'une plante (2), telle qu'une graine, une bouture ou une bouture pré-enracinée, dans un bouchon d'enracinement, dans lequel le procédé comprend les étapes de :
- la fourniture d'un corps (1 ; 101 ; 201) selon l'une des revendications 1 à 8 dans sa première forme ;
- le placement d'une dite partie d'une plante (2) sur la partie de surface interne (8) du corps (1 ; 101 ; 201) ; et
- par la suite, le repliement du corps (1 ; 101 ; 201) de sa première forme vers sa seconde forme.

11. Procédé selon la revendication 10, comprenant en outre l'étape de placement du corps replié (1 ; 101 ; 201) avec ladite partie d'une plante (2) au sein de la partie de surface interne (8), dans une cavité de bouchon (13) d'un plateau de plante (2).
